# EUROPÄISCHE PATENTSCHRIFT

(11) **EP 0 802 408 B1**
(45) Veröffentlichungstag und Bekanntmachung des Hinweises auf die Patenterteilung: **09.08.2006**
(21) Anmeldenummer: 97106014.0
(22) Anmeldetag: 11.04.1997
(51) Int. Cl.: G01N 21/31

(54) **Verfahren zur Konzentrationsbestimmung mittels Kontinuums-Atomabsorptionsspektroskopie**
Method for determining concentration using continuous atomic absorption spectroscopy
Procédé pour déterminer la concentration par spectroscopie d'absorption atomique continue

(30) Priorität: 19.04.1996 DE 19617100
(43) Veröffentlichungstag der Anmeldung: 22.10.1997
(73) Patentinhaber: Perkin Elmer Bodenseewerk Zweigniederlassung der Berthold GmbH & Co. KG, 88662 Überlingen (DE)
(72) Erfinder: Weisse, Renate, 10827 Berlin (DE)
(74) Vertreter: Grünecker, Kinkeldey, Stockmair & Schwanhäusser Anwaltssozietät

(56) Entgegenhaltungen:
- DE-A- 4 230 298
- JONES B T ET AL: "CONTINUUM SOURCE ATOMIC ABSORPTION SPECTROMETRY IN A GRAPHITE FURNACE WITH PHOTODIODE ARRAY DETECTION" ANALYTICAL CHEMISTRY, Bd. 61, Nr. 15, 1.August 1989, Seiten 1670-1674, XP000081144

## Beschreibung

### Technisches Gebiet

Die Erfindung betrifft ein Verfahren zur Konzentrationsbestimmung mittels Kontinuums-Atomabsorptionsspektroskopie.

### Zugrunde liegender Stand der Technik

Bei der üblichen Atomabsorptions-Spektroskopie wird ein Meßlichtbündel erzeugt, das von einer linienemittierenden Lichtquelle ausgeht. Die Lichtquelle, z. B. eine Hohlkathodenlampe, emittiert ein Linienspektrum, das den Resonanzlinien eines bestimmten zu bestimmenden Elements entspricht. Das Meßlichtbündel wird dabei durch einen Atomisierungsbereich geleitet, in welchem die Atome einer Probe in atomarem Zustand vorliegen. Ein solcher Atomisierungsbereich kann beispielsweise das Innere eines Graphitofens sein, in welchem die Probe elektrothermisch atomisiert wird. Das Meßlichtbündel erfährt in dem Atomisierungsbereich durch den Atomdampf eine zeitabhängige spezifische Absorption, die von der Menge des zu bestimmenden Elements in der Probe abhängt. Das Meßlichtbündel tritt dann durch einen Monochromator mittlerer Auflösung, der aus dem Linienspektrum nur eine bestimmte Linie durchläßt. Das Meßlichtbündel fällt dann auf einen einzigen Detektor, üblicherweise einen Photomultiplier. Auf diese Weise kann jeweils nur ein einziges Element auf einmal bestimmt werden, nämlich das Element, dessen Resonanzlinien von der Lichtquelle emittiert werden.

Es ist weiter bekannt, abwechselnd mit dem von der Hohlkathodenlampe ausgehenden Meßlichtbündel ein Referenzlichtbündel durch den Atomisierungsbereich auf den Detektor zu leiten um den Einfluß von Untergrundabsorption zu kompensieren. Dieses Referenzlichtbündel hat dabei eine im Vergleich zur Linienbreite der Hohlkathodenlampe große Bandbreite. Dadurch wird das Referenzlichtbündel von der spezifischen Absorption durch die Probenatome praktisch nicht beeinflußt.

Eine andere Art der Kompensation von Untergrundabsorption besteht darin, an die Lichtquelle oder die atomisierte Probe periodisch ein starkes magnetisches Feld anzulegen. Dadurch werden die emittierten Spektrallinien bzw. die Absorptionslinien infolge des Zeeman-Effektes aufgespalten. Es erfolgt eine periodische Relatiwerschiebung zwischen den von den Probenatomen absorbierten und den von der Lichtquelle emittierten Spektrallinien. Die Untergrundabsorption wird von dem Magnetfeld i. a. nicht beeinflusst, während die spezifische Atomabsorption bei Anlegen des Magnetfeldes wegfällt. Durch Differenzbildung kann die hinsichtlich Untergrundabsorption korrigierte reine Atomabsorption bestimmt werden.

Es sind weiterhin Atomabsorptionsspektrometer bekannt, die eine kontinuierliche Strahlungsquelle in Kombination mit einem hochauflösenden Spektrometer und einer Vielzahl von Detektorelementen verwenden. Bei diesen Atomabsorptionsspektrometm wird die Untergrundabsorption dadurch bestimmt, dass die Absorption in unmittelbarer Nachbarschaft der Analytlinie gemessen wird. Die spezifische Absorption wird dann bestimmt, indem die solchermaßen bestimmte Untergrundabsorption von der Gesamtabsorption, die auf der Analytwellenlänge gemessen wurde, abgezogen wird. Die Auswahl des jeweiligen spektralen Bereichs, in dem der Untergrund bestimmt wird, erfolgt dabei durch Beurteilung des Spektrums durch denjenigen, der die Messung durchführt.

Jones B T, et al: "Continuum source atomic absorption spectrometry in a graphite fumace with photodiode array detection" Analytical Chemistry, Bd. 61, Nr. 15, 1. August 1989, Seiten 1670-1674, XP000081144 beschreibt ein Atomabsorptionsspektrometer mit einer Kontinuumquelle und einem Graphitofen, wobei ein Photodiodendetektorfeld verwendet wird. Ein Verfahren zur Korrektur von Spektren im Hinblick auf breitbandigen und strukturierten Untergrund, in dem eine Funktion von mehreren Variablen und der Wellenlänge angenommen wird, ist nicht offenbart. Weiterhin sind einzelne Schritte zur Ermittlung der Größe der Störabsorption aufgrund einer Interferenzlinie, welche der mit der Analytlinien überlappt; nicht offenbart.

DE 42 30 298 A beschreibt ein Atomabsorptionsspektrometer für die Kontinuumatomabsorptionsspektrometrie mit einer Hochdrucklampe. Zur Kompensation von Untergrundabsorption ist die Hochdrucklampe mit wenigstens einem zu bestimmenden Element dotiert und eine Detektoranordnung vorgesehen mit einem Detektorelement am Ort einer Resonanzlinie des zu bestimmenden Elements und wenigstens einem weiteren Detektorelement im Bereich der durch den Gasdruck in der Hochdrucklampe verbreiteten Emissionslinie der Dotierung.

### Offenbarung der Erfindung

Liegen in einer Probe nicht nur Atome des zu bestimmenden Elementes vor, sondem auch Moleküle und andere Atome, die eine Absorption innerhalb der spektralen Bandbreite des Monochromators bewirken, so muss die Größe dieser Absorption ermittelt und korrigiert werden. Zeigt dieser Untergrund eine nichtlineare Abhängigkeit von der Wellenlänge, so liegt strukturierter Untergrund vor. Insbesondere bei der Korrektur von strukturiertem Untergrund mittels einer kontinuierlichen Strahlungsquelle als Referenzlichtbündel in der Linien-AAS, bei der Spektrometer mittlerer Auflösung verwendet werden, können sich daher Probleme ergeben. In den meisten Fällen können diese Störungen mit dem Zeeman-Verfahren korrigiert werden. Es sind aber auch Beispiele bekannt, in denen mit diesem Verfahren eine fehlerhafte Untergrundkorrektur vorliegt. Dieses ist insbesondere der Fall, wenn unmittelbar neben der Analysenlinie die Atomlinie eines anderen Elementes liegt, die durch das Magnetfeld ebenfalls aufgespalten wird, und dann in den spektralen Bereich der Emissionslinie des Linienstrahlers gelangt.

Dadurch wird die Untergrundabsorption überschätzt und bewirkt eine Überkompensation bei der Berechnung der Analytkonzentration. Bei einer anderen Gruppe rührt der Untergrund von strukturierten Molekülspektren her, die einen Zeeman-Effekt zeigen. In diesem Fall kann eine Über- oder Unterkompensation vorliegen. Dabei bestehen die Molekülspektrum i. a. aus einer Vielzahl von dicht beieinanderliegenden Rotationslinien aus denen die Schwingungsbanden eines elektronischen Übergangs eines Moleküls bestehen. In der Kontinuums-Atomabsorptionsspektrometrie wurde bisher eine Methode benutzt, die sowohl breitbandigen, als auch strukturierten Untergrund korrigieren kann. Letzteren jedoch nur, wenn er vollständig zeitlich oder spektral von der spezifischen Absorption getrennt werden konnte. Dies ist aufgrund der Absorptionslinienbreiten (Druck- und Dopplerverbreiterung) auch bei hoher Auflösung nicht immer möglich. Eine zeitliche Trennung liegt nur in Ausnahmefällen vor und hängt stark von der Matrix der Probe, dem verwendeten Temperaturprogramm für den Graphitofenatomisierer und den Atomisierungseigenschaften der Elemente ab. Die Störung kann durch ein geeignetes Temperaturprogramm und geeignete Modifier reduziert werden, wodurch sich das Signal-Rauschverhältnis des Absorptionssignals verbessert. Dies setzt jedoch die Kenntnis der Reaktionsmechanismen im Graphitofen voraus.

Der Erfindung liegt nun die Aufgabe zugrunde, die Richtigkeit der Konzentrationsbestimmung mittels Atomabsorptionsspektrometrie zu verbessern.

Der Erfindung liegt ferner die Aufgabe zugrunde, die Absorption von strukturiertem Untergrund in einem Graphitofen zu ermitteln.

Erfindungsgemäß wird die Aufgabe dadurch gelöst, daß zur Konzentrationsbestimmung mittels Atomabsorptionsspektrometrie
a) ein Kontinuumsstrahler als Strahlungsquelle verwendet wird,
b) ein hochauflösendes Spektrometer als dispersives Element verwendet wird,
c) ein Detektor verwendet wird, der aus einer Vielzahl von Detektorelementen besteht und d) Verfahrensschritte zur Ermittlung der spezifischen Absorption vorgenommen werden, die dadurch gekennzeichnet sind daß
   i) die Strahlungsintensität ohne Absorption I₀ für jedes Detektorelement vor dem Atomisierungsschritt bestimmt wird und daraus für jedes Detektorelement P und zu jedem Zeitpunkt t der Atomisierung eine unkorrigierte Extinktion A(P,t)= log(I₀(P)/I(P,t)) ermittelt wird
   ii) breitbandiger Untergrund und strukturierter Untergrund, dessen Wellenlängenabhängigkeit im mittleren Bandbreitenbereich liegt, ermittelt wird, indem eine Funktion von mehreren Variablen und der Wellenlänge angenommen wird, die die lokalen Minima des Spektrums beschreibt, und deren Variablen solange variiert werden, bis sich ein optimaler Korrelationskoeffizient ergibt.
   iii) der solchermaßen ermittelte Untergrund von der Extinktion auf jedem Detektorelement subtrahiert wird
   iv) festgestellt wird, ob eine Interferenzlinie mit der Analytlinie überlappt, indem der Zeitverlauf der Extinktion auf dem Detektorelement mit maximaler Analytabsorption in Relation gesetzt wird mit dem Zeitverlauf auf den benachbarten Detektorelementen
   v) das Linienprofil der Störlinie bei interferierenden Atomlinien vorher durch Messung des Profils dieser Atomlinien ermittelt wird oder bei interferierenden Moleküllinien auf einer anderen ungestörten Moleküllinie im gleichen spektralen Bereich ermittelt wird
   vi) die spektrale Lage des Peakmaximums der Störlinie zu dem Zeitpunkt ermittelt wird, zu dem die Störabsorption relativ zur Analytabsorption am größten ist,
   vii) aus der Lage und dem Profil der Störlinie die Größe der Störabsorption auf der Analytwellenlänge berechnet und von der spezifischen Extinktion subtrahiert wird.

Die Aufgabe der Erfindung wird insbesondere dann gelöst, wenn die spektrale Bandbreite des Spektrometers maximal wenige vielfache der Halbwertsbreite der Analytlinie beträgt.

In einem Spektrum, daß einen wellenlängenabhängigen breitbandigen Anteil enthält, kann neben der Analytlinie auch noch ein linienreiches Molekülspektrum überlagert sein. Es reicht also nicht aus, die einzelnen Peaks neben der Analytlinie aufzulösen, sondern man muß auch noch den breitbandigen Anteil ermitteln. Dazu werden die lokalen Minima des Spektrums ermittelt und eine Funktion hindurchgelegt. Diese Funktion kann z. B. ein Polynom sein. Subtrahiert man dieses Polynom vom Spektrum, so ergibt sich ein Spektrum aus Einzelpeaks, in dem die Extinktion auf den Detektorelementen, auf denen sich vorher die Minima befanden, gerade Null ist. Nun kan aber immer noch eine Störlinie mit der Analytlinie überlappen, sodaß weitere Korrektrumaßnahmen vorgenommen werden müssen. Zunächst muß festgestellt werden, ob überhaupt eine solche Störung vorliegt. Dazu wird der Zeitverlauf der Extinktionen auf dem Peakpixel (PP) und den benachbarten Pixeln (PP+/-1), (PP+/-2),...(PP+/-x) betrachtet. Liegt keine Störung vor, so ist ihr Verhältnis A(PP+/-x)/A(PP) zeitlich konstant. Ist dies nicht der Fall, so liegt eine Störung vor und man kann mit dem Maximum des Quotienten dasjenige Einzelspektrum auswählen, bei dem die Störung am größten ist und somit die Information über das Störmolekül am besten zu erhalten sind.

Aus einer anderen Linie des Störmoleküls kann man in diesem Einzelspektrum die Halbwertsbreite der Störlinie abschätzen und unter Annahme eines z. B. Gaußförmigen Linienprofils die genaue Wellenlänge des Maximums der Störlinie berechnen. Aus dem ursprünglichen, über die Zeit integrierten Spektrum wird dann die Höhe des Maximums der Störlinie bestimmt, aus dem sich zusammen mit ihrem Profil die Größe der Störung auf der Analytlinie ergibt.

Ein Ausführungsbeispiel der Erfindung ist nachstehend unter Bezugnahme auf die zugehörigen Zeichnungen näher erläutert.
**Fig. 1** zeigt den Aufbau eines Kontinuums-Atomabsorptionsspektrometers
**Fig. 2** zeigt ein Absorptionsspektrum, das man erhält, wenn man Arsen mit NH₄H₂PO₄ atomisiert
**Fig. 3** zeigt ein Absorptionsspektrum, daß man erhält, wenn man Selen mit NH₄H₂PO₄ atomisiert
**Fig. 4** zeigt ein Absorptionsspektrum, in dem die lokalen Minima gekennzeichnet sind, mit denen die beste Funktion ermittelt wird, die den wellenlängenabhängigen breitbandigen Untergrund beschreibt.
**Fig. 5** zeigt einen Spektrumsausschnitt, in dem die spektrale Überlagerung der Analytlinie mit einer Störlinie dargestellt ist, sowie die berechnete Profilfunktion der Störlinie
**Fig. 6** zeigt den Zeitverlauf der Extinktionen auf dem Peakpixel und den benachbarten Pixeln und ihrer Quotienten

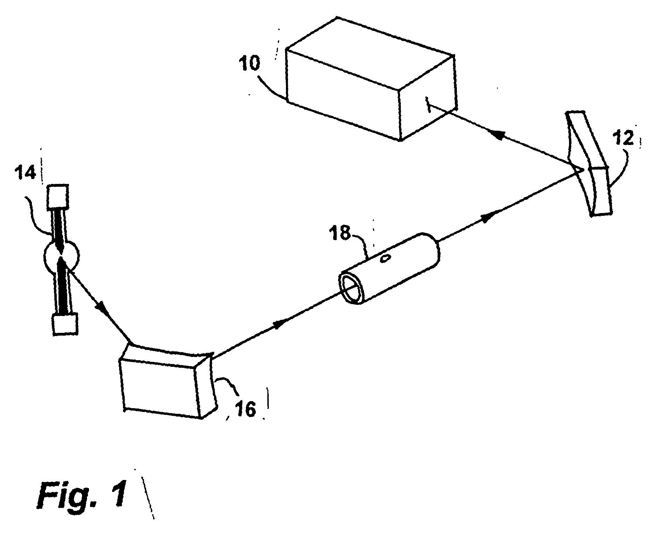

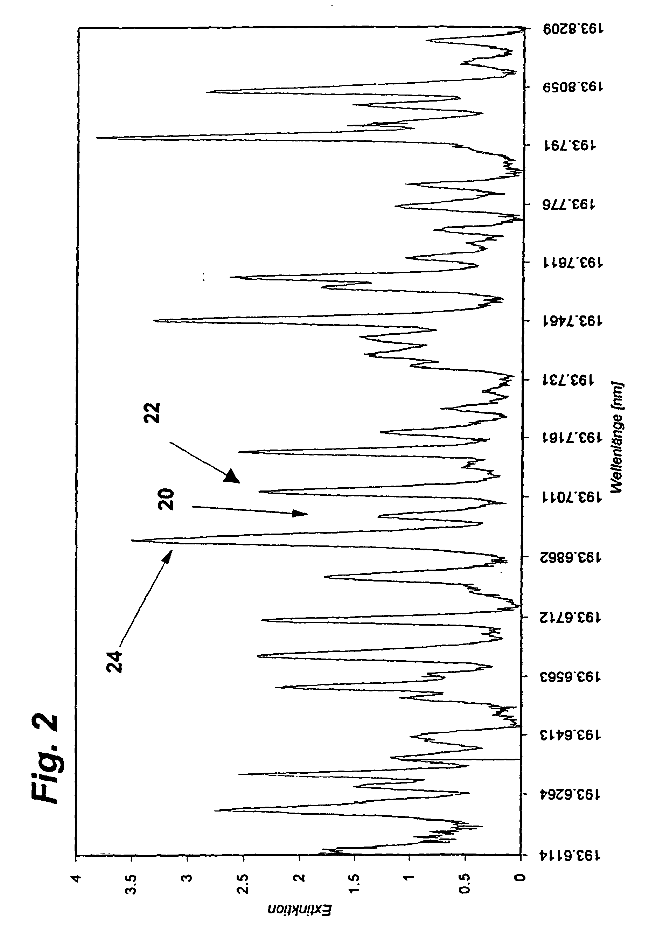

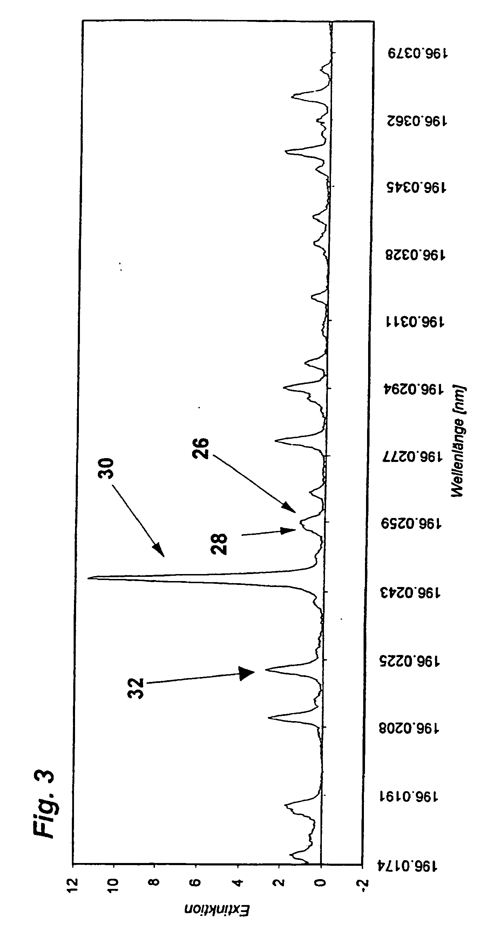

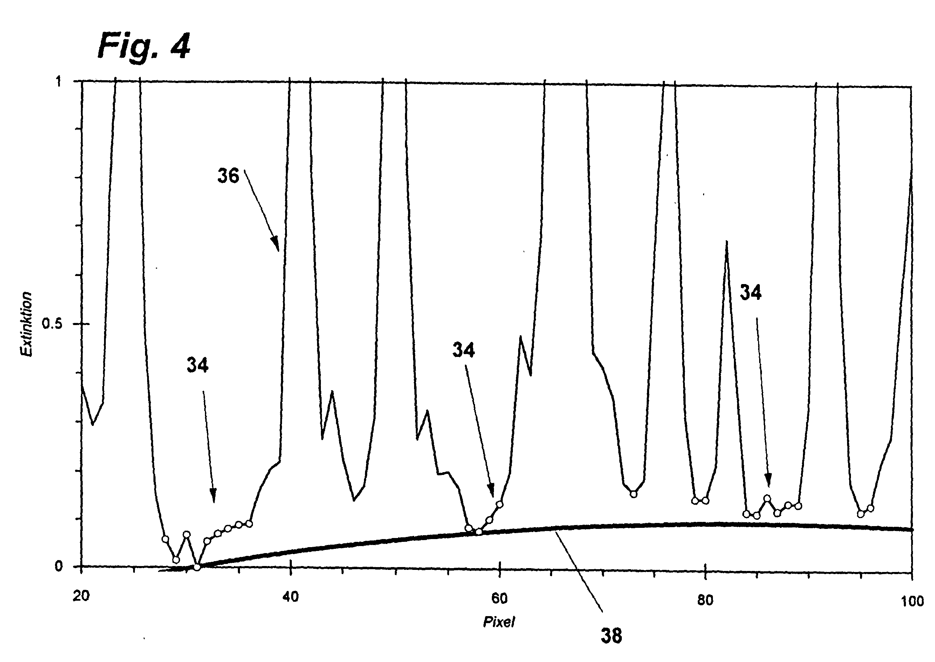

In Fig. 1 ist mit 14 eine Xenon-Hochdruck-Kurzbogenlampe bezeichnet, die ein Meßlichtbündel mit einem kontinuierliches Spektrum aussendet.Das Meßlichtbündel wird von einem torischen Spiegel 16 in der Bohrung eines Graphitofens 18 fokussiert. Das aus dem Graphitofen 18 austretende, divergente Meßlichtbündel wird durch einen torischen Spiegel 12 wieder gesammelt. Das wieder konvergente Meßlichtbündel fällt dann auf den Eintrittspalt eines hochauflösenden Spektrometers 10, in dessen Austrittsspaltebene sich eine CCD-Zeile befindet, die die Intensitätswerte an einen Computer weitergibt. Bei dem Spektrometer 10 handelt es sich um einen Doppel-Echelle-Monochromator mit einer Auflösung von 100 000. In Fig. 2 ist ein Extinktionsspektrum dargestellt, wie es sich ergibt, wenn die Strahlung des Kontinuumsstrahlers von Arsen bei 193 nm absorbiert wurde und sich in der Probe große Mengen an NH₄H₂PO₄ befinden. Man findet neben dem Arsenpeak 20 ein stark strukturiertes Molekülspektrum. Der Arsenpeak 20 liegt genau zwischen zwei Molekülpeaks 22 und 24. Bei der Atomisierung von Selen in Gegenwart von NH₄H₂PO₄ und Palladium ergibt sich jedoch eine andere Situation, wie man in Fig.3 erkennen kann. Der Selenpeak 26 überlappt mit einem Molekülpeak 28 so stark, daß selbst bei der hohen spektralen Auflösung keine Ausreichende Trennung der Peaks vorliegt. Bei stark gestreckter Extinktionsachse, wie es in Fig. 4 der Fall ist, kann man sehen, daß neben den Molekülpeaks 36, auch noch ein breitbandiger, wellenlängenabhängiger Anteil im Spektrum vorliegt. Um diesen zu quantifizieren, wird eine Funktion 38 ermittelt, die die lokalen Minima 34 des Spektrums beschreibt. Diese Funktion erhält man nach einem Muster, wie es in Tabelle 1 dargestellt ist.

**Tabelle 1 Darstellung des Verfahrens zu Ermittelung und Korrektur von breitbandigem, wellenlängenabhängigen Untergrund**

| **Prozedur UGKpixel auswählen** | |
|---|---|
| Spektrum A(Pixel) berechnen | |
| Fenster = 7 Pixel | |
| Inc(Fenster) | Minimum in jedem Fenster berechnen |
| | Polynom 2. Ordnung durch Minima legen |
| | Optimalen Korrelationskoeffizienten merken |
| | Fenster > Pixelzahl/4 |
| A(Pix) = A(Pix)-Polynom mit optimalen Korrel.Koeff (Pix) | |
| Standardabweichung von A berechnen | |
| T=15 | |
| Dec(T) | IF A(Pixel) < Stdabw/T THEN Pixel ist Korrekturpixel |
| | T=1 OR 40 Korrekturpixel gefunden |

Als Korrekturpixel werden dabei die lokalen Minima 34 bezeichnet, durch die die Funktion 38 (hier ein Polynom 2. Ordnung) festlegen, sowie alle diejenigen, die innerhalb einer Extinktionsbreite von einer Standardabweichung um die Funktionwerte herumliegen.

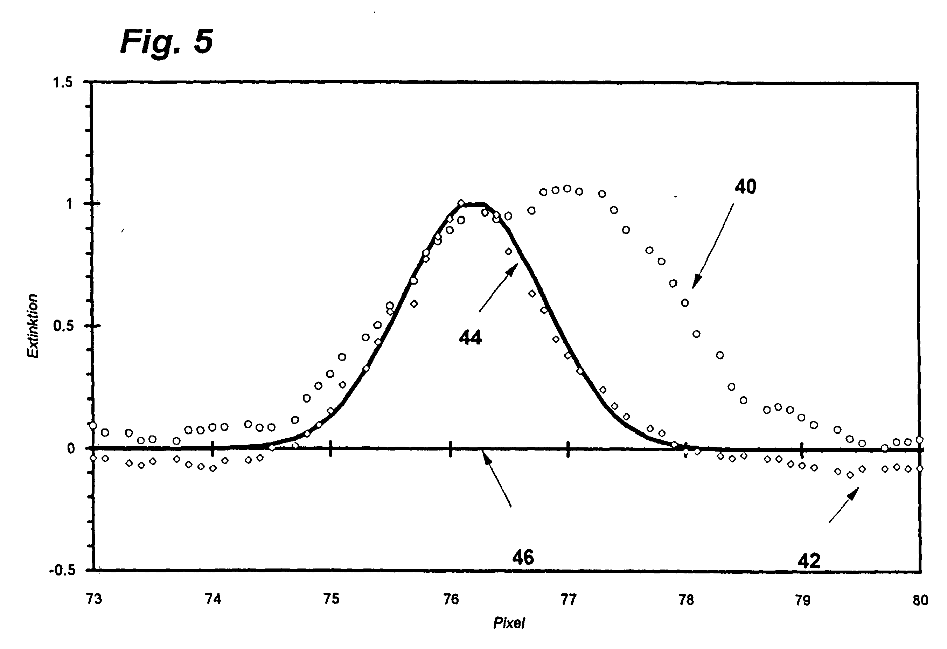

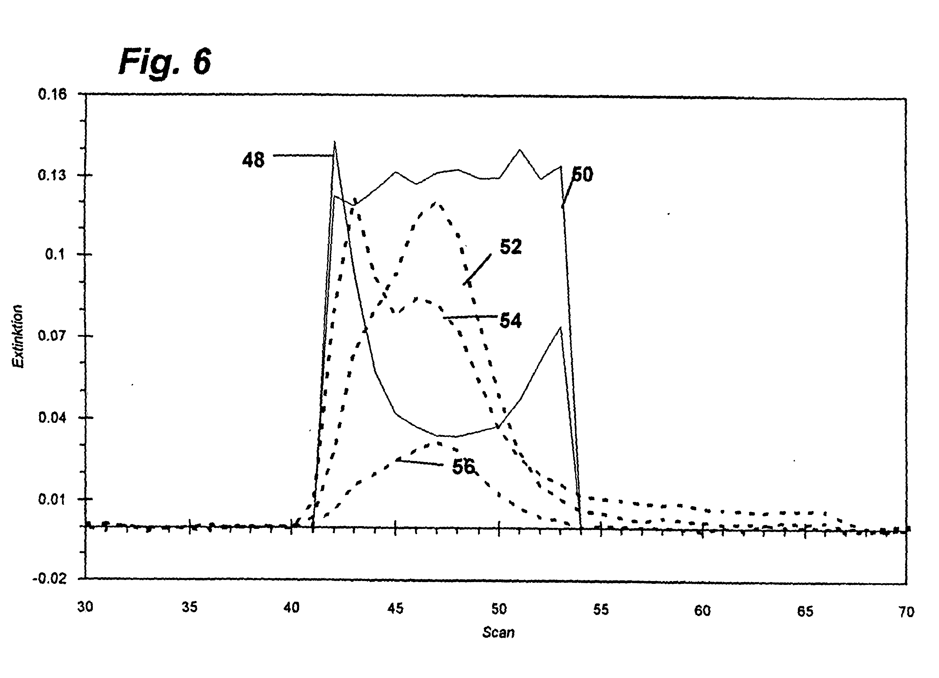

Nach Korrektur von breitbandigem, wellenlängenabhängigen Untergrund, kann sich eine Situation ergeben, wie sie in Fig. 5 dargestellt ist. Die mit 40 und 42 bezeichneten Meßkurven ergeben sich aus 10 Absorptionsmessungen, bei denen jeweils die Wellenlänge um 1/10 Pixel verschoben wurde, sodaß mit 10 Messpunkten pro Pixel eine höhere Auflösung erzielt werden konnte. Die Kurve 40 beschreibt das Spektrum einer Selenlinie, die durch eine Moleküllinie in einem Abstand von weniger als 1 Pixel (8 Punkte) gestört wird. Die Kurve 42 beschreibt das gleiche Spektrum ohne Selen. Um nun festzustellen, ob eine derartige Störung vorliegt, geht man vor, wie es in Fig. 6 dargestellt ist. Dazu bildet man zu jedem Zeitpunkt die Quotienten der Extinktionswerte 52 und 56 der benachbarten Pixel auf den Flügeln der Analytlinie mit den Extinktionswerten 54 auf dem Peakpixel. Man erhält dann einen Zeitverlauf, wie er ebenfalls in Fig. 6 dargestellt ist. Liegt keine Störung vor, so müssen die Quotienten konstant in der Zeit sein, wie es in Graph 50 dargestellt ist. Liegt dagegen eine Störung vor, zeigen die Quotienten eine Zeitabhängigkeit wie in Graph 48. Zur Beurteilung ob der Graph 50 konstant ist, kann man zeitlichen Mittelwert und Standardabweichung der Quotienten bilden und sehen, ob alle Werte in einem Intervall von z. B. 2 Standardabweichungen um den Mittelwert liegen. Bei den Quotienten, wie sie in Graph 48 dargestellt sind, ist dies nicht der Fall. Es liegt also eine Störung vor. Um große Werte für Quotienten zu vermeiden, die entstehen, wenn weder auf dem Peakpixel, noch auf den benachbarten Pixeln Werte anliegen, die größer als eine Standardabweichung sind, werden nur Quotienten gebildet, bei denen der Nenner größer als eine Standardabweichung ist.

Anhand der Quotienten 48, kann man sehen wann die Störung relativ zum spezifischen Signal am größten ist. In Fig. 6 ist dies in dem 41. Scan der Fall. In dem 41. gemessenen-Spektrum erhält man also am meisten Informationen über das Spektrum des Störmoleküls. Um die größe der Störung auf der Analysenlinie zu ermittlen muß man 3 Größen bestimmen: Die Lage des 46 des Peakmaximums, die Breite des Peaks und die Höhe des Peaks. Mit einer geeigneten Profilfunktion, in Fig. 5 wurde eine Gaußfunktion gewählt, kann man dann den Extinktionswert der Störlinie auf der Peakwellenlänge der Analytlinie bestimmen. Die Breite der Störlinie kann man aus einer anderen Moleküllinie (in Fig. 3 mit 32 bezeichnet) ermitteln. Zusammen mit der Gaußfunktion und den (ungestörten) Extinktionswerten auf dem Maximum der Störlinie und dem Pixel, das auf der anderen Seite der Störlinie (also nicht auf der Analytlinienseite) liegt, ergibt sich dann das berechnete Maximum der Störlinie und seine Lage. Damit ist die Größe der Störung bestimmt und kann von dem Extinktionswert auf der Wellenlänge des Analytpeaks subtrahiert werden. In Tabelle 2 ist das Verfahren zur Korrektur von überlappenden Linien nocheinmal dargestellt.

Einfacher ist es, wenn die Störung von einer Atomlinie herrührt. Dann kann das Linienprofil und die genaue Lage aus einer vorherigen Messung, in der nur das Störelement dosiert wurde, einfach bestimmt werden. Bei Molekülen ist dies im allgemeinen nicht möglich, da die Moleküle teilweise sehr kurzlebig sind, und ihr Entstehen von der Matrix der Probe abhängt.

**Tabelle 2 Verfahren zur bestimmung des Untergrundes durch überlappende Linien**

| **Prozedur Automatisches Auswerten** | |
|---|---|
| UGKpixel auswählen | |
| Zeitpeak berechnen | |
| Quotienten A(PP +/- 1)/A(PP) für jeden Scan bilden | |
| IF Maximum(Quotienten) > Mittelwert+2*Stdabw THEN Störung vorhanden | |
| Einzelspektrum für den Scan mit Max(Quotient) berechnen | |
| Peakpixel PP der Störlinie im Einzelspektrum bestimmen | |
| Weitere Linien des Störmoleküls vorhanden? | |
| **NEIN** | **JA** |
| HWB | weitere Linie des Störmoleküls suchen |
| annehmen | => Peakpixel = PP2 und ber. Maximum = Max2 |
| | UGKpixel auswählen |
| UGKpixel auswählen | a = In(A[pp2-1]/A[pp2]) /In(A[pp2+1]/A[pp2]) |
| | max2= PP2 + (a-1)/(2a+2) |
| | HWB=sqrt(8in2(IPP2-Maxl-0.5)/In(A(PP2+/-1)/A(PP2))) |
| max1= 0.5-PP-HWB*(In(A[PP-1]/A[PP])/wurzel(8In2) | |
| IF max1 < 0 THEN max1= 0.5+PP+HWB*(In(A[PP-1]/A[PP])/wurzel(8In2) | |
| A(max1)=A[PP]*exp(0.5*sqr(PP-max1)/sqr(HWB/wurzel(8In2))) | |
| A(UG) = A(max1)*exp(0.5*sqr(Pix-max1)/sqr(HWB/wurzel(8In2))) | |
| **A(pix) = A(gemessen)-A(UG)** | |

## Patentansprüche

1. Verfahren zur Konzentrationsbestimmung mittels Atomabsorptionsspektrometrie, welches ein Atomabsorptionsspektrometer verwendet, welches
a) einen Kontinuumstrahler (14) als Strahlungsquelle,
b) ein hochauflösendes Spektrometer (10) als dispersives Element,
c) einen Detektor, der aus einer Vielzahl von Detektorelementen besteht, enthält,
mit den
folgenden Verfahrensschritten zur Ermittlung der spezifischen Absorption, die die Untergrundabsorption berücksichtigen, wobei :
i) die Strahlungsintensität ohne Absorption I₀ für jedes Detektorelement vor dem Atomisierungsschritt bestimmt wird und daraus für jedes Detektorelement P und zu jedem Zeitpunkt t der Atomisierung eine unkorrigierte Extinktion A(P,t) = log(I₀(P)/I(P,t)) ermittelt wird,
ii) breitbandiger Untergrund und strukturierter Untergrund, dessen Wellenlängenabhängigkeit im mittleren Bandbreitenbereich liegt, ermittelt werden, indem eine Funktion von mehreren Variablen und der Wellenlänge angenommen wird, die die lokalen Minima des Spektrums beschreibt, und deren Variablen solange variiert werden, bis sich ein optimaler Korrelationskoeffizient ergibt, und
iii) der solchermaßen ermittelte Untergrund von der Extinktion auf jedem Detektorelement subtrahiert wird,
**gekennzeichnet durch** die zusätzlichen Verfahrensschritte:
iv) aus zeitlich aufeinanderfolgenden Absorptionsmessungen wird festgestellt, ob eine Interferenzlinie mit der Analytlinie überlappt, indem der Zeitverlauf eines Verhältnisses der Extinktion auf dem Detektorelement mit maximaler Analytabsorption **durch** die Extinktionen auf den benachbarten Detektorelementen gebildet wird, und indem bestimmt wird, ob das Verhältnis im Zeitverlauf um mehr als einen festgesetzten Betrag schwankt, wobei eine Interferenzlinie mit der Analytlinie als überlappend definiert wird, wenn das Verhältnis der Extinktionen im Zeitverlauf um mehr als den festgesetzten Betrag schwankt,
v) das Linienprofil der Störlinie bei interferierenden Atomlinien wird vorher **durch** Messung des Profils dieser Atomlinien ermittelt oder wird bei interferierenden Moleküllinien auf einer anderen ungestörten Moleküllinie im gleichen spektralen Bereich ermittelt,
vi) die spektrale Lage des Peakmaximums der Störlinie wird zu dem Zeitpunkt ermittelt, zu dem die Störabsorption relativ zur Analytabsorption am größten ist, und
vii) aus der Lage und dem Profil der Störlinie wird die Größe der Störabsorption auf der Analytwellenlänge berechnet und von der spezifischen Extinktion subtrahiert.

2. Verfahren nach Anspruch 1, **gekennzeichnet dadurch, dass** die berücksichtigte Untergrundabsorption eine Wellenlängenabhängigkeit aufweist.

3. Verfahren nach Anspruch 2, **gekennzeichnet dadurch, dass** die berücksichtigte Untergrundabsorption eine breitbandige und eine schmalbandige Wellenlängenabhängigkeit aufweist.

## Claims

1. A method of determining concentrations by means of atomic absorption spectrometry using an atomic absorption spectrometer which comprises
a) a continuum source (14) as a source of radiation;
b) a high-resolution spectrometer (10) as a dispersive element;
c) a detector consisting of a plurality of detector elements,
comprising the following steps for determining the specific absorption, which take into account the background absorption, wherein:
i) the radiation intensity without absorption I₀ is determined for each detector element prior to the atomizing step and an uncorrected extinction A(P,t) = log(I₀(P)/I(P,t)) is determined therefrom for each detector element P and at each time t of the atomization;
ii) a broadband background and a structured background the wavelength dependence of which is within the mean bandwidth range are determined in that a function of a plurality of variables and the wavelength is assumed, which function describes the local minima of the spectrum and the variables thereof are varied until an optimum correlation coefficient is obtained; and
iii) the background determined in this manner is subtracted from the extinction on each detector element;
**characterized by** the additional steps:
iv) it is determined from absorption measurements succeeding one another in time whether an interference line overlaps with the analysis line in that the course of time of a ratio is formed of the extinction on the detector element having a maximum analysis absorption divided by the extinctions on the adjacent detector elements, and in that it is defined whether the ratio in the course of time varies by more than a fixed amount, an interference line with the analysis line being defined as overlapping if the ratio of the extinctions in the course of time varies by more than the fixed amount;
v) the line profile of the interfering line in the case of interfering atom lines is previously determined by measuring the profile of said atom lines or is determined in the case of interfering molecule lines on another non-interfered molecule line in the same spectral region;
vi) the spectral position of the peak maximum of the interfering line is determined at the time at which the inference absorption is maximum relative to the analysis absorption;
vii) the magnitude of the interference absorption on the analysis wavelength is calculated from the position and the profile of the interfering line and is subtracted from the specific extinction.

2. The method according to claim 1, **characterized in that** the background absorption taken into account has a wavelength dependence.

3. The method according to claim 2, **characterized in that** the background absorption taken into account has a broadband and a narrowband wavelength dependence.

## Revendications

1. Procédé de détermination de concentration à l'aide de la spectrométrie d'absorption atomique, qui utilise un spectromètre d'absorption atomique, qui contient :
a) une source à fond continu (14) en tant que source de rayonnement,
b) un spectromètre à haute résolution (10) en tant qu'élément de dispersion,
c) un détecteur, qui est constitué d'une pluralité d'éléments détecteurs,
présentant les étapes de procédé suivantes pour détecter l'absorption spécifique, lesquelles étapes prennent en compte l'absorption de fond, moyennant quoi :
i) l'intensité du rayonnement sans absorption iₒ pour chaque élément détecteur est déterminée avant l'étape d'atomisation et, à partir de cela, pour chaque élément détecteur P et à chaque instant t de l'atomisation, une densité optique non corrigée A(P, t) = log(lₒ(P)/l(P,t)) est définie,
ii) le fond à large bande et le fond structuré, dont la dépendance par rapport à longueur d'onde se trouve dans la plage moyenne des larges bandes, sont déterminés en ce qu'on part d'une fonction utilisant plusieurs variables et la longueur d'onde, laquelle décrit les minimum locaux du spectre, et dont on fait varier les variables jusqu'à ce qu'on obtienne un coefficient de corrélation optimal, et
iii) le fond déterminé de cette manière est soustrait de la densité optique sur chaque élément détecteur,
**caractérisé par** les étapes de procédé supplémentaires suivantes :
iv) à partir des mesures d'absorption successives dans le temps, on constate si une ligne d'interférence chevauche la ligne d'analyte, en ce que l'évolution temporelle d'un rapport entre la densité optique sur l'élément détecteur et l'absorption d'analyte maximale est formée par les densités optiques sur les éléments détecteurs voisins, et en ce qu'on détermine si le rapport au fil du temps oscille autour de plus d'une valeur fixée, moyennant quoi une ligne d'interférence est définie comme chevauchant la ligne d'analyte, lorsque le rapport des densités optiques au fil du temps oscille autour de plus de la valeur fixée,
v) le profil linéaire de la ligne parasite, dans le cas de lignes atomiques interférentes, est auparavant déterminé en mesurant le profil de cette ligne atomique ou, dans le cas de lignes moléculaires interférentes, est déterminée sur une autre ligne moléculaire non parasitée dans le même domaine spectral,
vi) la position spectrale du pic maximum de la ligne parasite est déterminée à l'instant où l'absorption parasite est maximale par rapport à l'absorption d'analytes, et
vii) d'après la position et le profil de la ligne parasite, le degré d'absorption parasite sur la longueur d'onde de l'analyte est calculé et soustrait de la densité optique spécifique.

2. Procédé selon la revendication 1, **caractérisé en ce que** l'absorption de fond considérée présente une dépendance par rapport à la longueur d'onde.

3. Procédé selon la revendication 2, **caractérisé en ce que** l'absorption de fond considérée présente une dépendance par rapport à la longueur d'onde de large bande et de bande étroite.
